# EUROPÄISCHE PATENTSCHRIFT

(11) **EP 3 377 378 B1**
(45) Veröffentlichungstag und Bekanntmachung des Hinweises auf die Patenterteilung: **25.02.2026**
(21) Anmeldenummer: 16793814.1
(22) Anmeldetag: 03.11.2016
(51) Int. Cl.: B60W 10/02, B60W 10/06, B60W 10/08, B60W 10/11, B60K 6/442, B60W 20/40, B60W 30/19, B60K 6/547

(54) **VERFAHREN ZUM BETREIBEN EINER ANTRIEBSEINRICHTUNG EINES HYBRIDFAHRZEUGES UND HYBRIDFAHRZEUG**
OPERATING METHOD FOR A DRIVE DEVICE OF A HYBRID VEHICLE AND HYBRID VEHICLE
PROCÉDÉ DE CONTRÔLE D'UN DISPOSITIF DE PROPULSION D'UN VÉHICULE HYBRIDE ET VÉHICULE HYBRIDE

(30) Priorität: 17.11.2015 DE 102015222694
(43) Veröffentlichungstag der Anmeldung: 26.09.2018
(73) Patentinhaber: Volkswagen Aktiengesellschaft, 38440 Wolfsburg (DE)
(72) Erfinder: FELSCH, Christian, 38104 Braunschweig (DE); RIELING, Jörg, 38116 Braunschweig (DE); ZILLMER, Michael, 38173 Sickte (DE)
(74) Vertreter: MFG Patentanwälte Meyer-Wildhagen Meggle-Freund Gerhard PartG mbB
(86) Internationale Anmeldenummer: PCT/EP2016/076584
(87) Internationale Veröffentlichungsnummer: WO 2017/084889

(56) Entgegenhaltungen:
- WO-A1-2009/006967
- WO-A1-2009/006967
- DE-A1- 102008 043 849
- DE-A1- 102008 043 849
- US-A1- 2004 147 365
- US-A1- 2004 147 365

## Beschreibung

Die vorliegende Erfindung betrifft ein Verfahren zum Betreiben einer Antriebseinrichtung eines Hybridfahrzeuges mit einem Getriebe und ein mit einem Getriebe ausgestattetes Hybridfahrzeug, welches ausgebildet ist, das Verfahren durchzuführen.

Aus der deutschen Offenlegungsschrift DE 10 2013 001 095 A1 ist ein Verfahren zum Betreiben einer Hybridantriebseinrichtung bekannt, wobei die Hybridantriebseinrichtung eine mit einer ersten Achse des Kraftfahrzeugs wirkverbindbare Brennkraftmaschine, einen ebenfalls mit der ersten Achse wirkverbindbaren ersten Elektromotor sowie einen mit einer zweiten Achse des Kraftfahrzeugs wirkverbindbaren zweiten Elektromotor aufweist. Die zum Betreiben des zweiten Elektromotors verwendete elektrische Energie wird von dem von der Brennkraftmaschine unter Anhebung ihrer Leistung angetriebenen ersten Elektromotor erzeugt oder wird ausschließlich einem Energiespeicher für elektrische Energie entnommen.

Das europäische Patent EP 1 074 087 B1 offenbart ein Regelverfahren und eine Vorrichtung für die Brennkraftmaschine eines elektrischen Hybridfahrzeuges, wobei ein elektrischer Motor oder Motor/Generator zwischen der Maschine und dem kontinuierlichen variablen oder automatischen Getriebe angeordnet ist und wobei das Hybridfahrzeug eine Batterie und zugeordnete Steuerelemente aufweist. Dabei hält ein Steuermittel die Leistungsausgabe der Brennkraftmaschine im Wesentlichen entlang einer idealen Betriebslinie, wenn sich die Geschwindigkeit der Maschine ändert. Ein zweiter Elektromotor kann ferner vorgesehen sein und die Drehmomentausgabe des zweiten Elektromotors kann mittels einer Systemsteuerung variiert werden.

Die deutsche Offenlegungsschrift DE 10 2012 103 292 A1 offenbart ein Verfahren zum Betrieb eines elektrischen Antriebstranges eines Fahrzeuges, wobei mindestens zwei Elektromotoren, die jeweils mit einer Antriebsachse in Wirkverbindung stehen, und eine Steuereinrichtung vorgesehen sind, wobei ein Fahrerwunschmoment für einen motorischen oder generatorischen Betrieb ermittelt wird, und wobei bei einer vorliegenden Abtriebsdrehzahl eine erforderliche Gesamtleistung des elektrischen Abtriebstranges ermittelt wird, und wobei die Leistungen der einzelnen Elektromotoren ermittelt werden, und wobei die sich ergebenden Verlustleistungen der einzelnen Elektromotoren auf Basis von hinterlegten Verlustleistungskennfeldern für die einzelnen Elektromotoren minimiert werden.

Die deutsche Offenlegungsschrift DE 10 2009 019 485 A1 offenbart einen Antriebstrang mit einem ersten Elektromotor und einem Planetengetriebe und Fahrzeuge, die diesen Antriebstrang aufweisen. Der Antriebstrang weist eine erste elektrische Maschine, welche in einem motorischen oder generatorischen Betriebszustand betreibbar ist, und ein Planetengetriebe mit einer Drehzahländerungsvorrichtung auf, wobei das Planetengetriebe eine An- und eine Abtriebsseite aufweist und wobei die erste elektrische Maschine im motorischen oder generatorischen Betriebszustand steuernd in die Drehzahländerungsvorrichtung eingreift, so dass sich ein Übersetzungsverhältnis im Planetengetriebe ausbildet. Über die erste elektrische Maschine wird das Übersetzungsverhältnis des Planetengetriebes beeinflusst, wodurch zusätzlich auch der Arbeitspunkt der Verbrennungsmaschine bestimmt wird. Die Verbrennungskraftmaschine wird nahe ihres optimalen Wirkungsgrades betrieben. In einem rein elektrischen Betrieb arbeitet die zweite elektrische Maschine als Motor und die erste elektrische Maschine befindet sich im Leerlauf oder wird als Zusatzantrieb genutzt. Ein Teil der von der Verbrennungsmaschine erzeugten mechanischen Energie wird durch die erste elektrische Maschine in elektrische Energie umgewandelt und direkt an die zweite elektrische Maschine weitergeleitet. Beschleunigungen werden von der zweiten elektrischen Maschine unterstützt. Bei einer Verzögerung kann durch Rekuperation der Bremsenergie der Energiespeicher geladen werden.

Die Übersetzung der europäischen Patentschrift DE 602 23 850 T2 offenbart ein Verfahren zum Betrieb eines Antriebsystems eines Hybridfahrzeuges, wobei das Hybridfahrzeug eine Brennkraftmaschine, einen ersten Elektromotor/Generator, einen Planetengetriebemechanismus und einen zweiten Elektromotor/Generator umfasst. Ein Verhältnis zwischen einem ersten Moment, das durch die Brennkraftmaschine bei den Fahrzeugachsen erzeugt wird, und einem zweiten Moment, das durch den zweiten Elektromotor bei den Fahrzeugachsen bei jeder Zahnradposition der Übersetzung erzeugt wird, wird von einem ersten Verhältnis, wenn sowohl die Brennkraftmaschine als auch der zweite Elektromotor normal arbeiten, auf ein zweites Verhältnis, wenn entweder die Brennkraftmaschine oder der zweite Elektromotor gestört sind, geändert.

Die deutsche Offenlegungsschrift DE 10 2007 054 368 A1 offenbart eine Steuerarchitektur zur Auswahl eines optimalen Modus oder einer optimalen Übersetzung und Antriebsdrehzahl für ein Hybridantriebstrangsystem, welches eine Brennkraftmaschine, einen ersten und einen zweiten Elektromotor und ein elektromechanisches Getriebe umfasst, das selektiv betreibbar ist, um Drehmoment dazwischen zu übertragen und in mehreren Modi mit fester Übersetzung und stufenlos verstellbaren Modi betreibbar ist. Für jeden zulässigen Betriebsbereichszustand werden bevorzugte Betriebsbedingungen und bevorzugte Kosten bestimmt und darauf basierend ein bevorzugter Betriebsbereichszustand ausgewählt. Eine Kostenstrukturinformation, die in ein strategisches Managementeinrichtungssegment eingegeben und in einem Optimierungssegment verwendet wird, umfasst vorzugsweise Betriebskosten, die allgemein auf der Basis von Faktoren bestimmt werden, die mit den Fahrzeugfahreigenschaften, der Kraftstoffwirtschaftlichkeit, Emissionen und Batterielebensdauer für den bestimmten Drehmomentbereich in Beziehung stehen. Darüber hinaus werden Kosten in einem Kraftstoff- und elektrischen Energieverbrauch, die zu dem spezifischen Betriebspunkt des Antriebstrangsystems für das Fahrzeug gehören, zugewiesen und zugeordnet. Die optimalen Betriebskosten können bestimmt werden, indem ein Gesamtantriebstrangsystemverlust berechnet wird, welcher einen Ausdruck auf der Basis des Maschinenleistungsverlustes, der durch Kraftstoffwirtschaftlichkeit und Abgasemissionen angetrieben ist, plus Verlusten in dem mechanischen System, Verlusten in dem elektrischen System und Wärmeverluste umfasst.

Die amerikanische Offenlegungsschrift US 2004/0147365 A1 offenbart ein Schaltsteuersystem für Hybridfahrzeuge, das Antriebsenergie des Hauptmotors über eine Kupplung und ein Getriebe auf ein Rad überträgt. Das Schaltsteuersystem umfasst eine Vorrichtung zur Erzeugung elektrischer Leistung durch die Antriebsenergie des Hauptmotors und zur Bereitstellung der erzeugten elektrischen Leistung an einen Elektromotor, wenn eine Gangumschaltung des Getriebes ausgeführt und die Antriebsenergie des Motors zum Reifen übertragen wird.

Eine Antriebseinrichtung eines Hybridfahrzeuges kann z. B. eine Verbrennungskraftmaschine und eine erste Elektromaschine und eine zweite Elektromaschine sowie einen elektrischen Akkumulator umfassen. Somit können verschiedene Antriebsaggregate zum Antreiben eines Antriebsrades verwendet werden. Das Hybridfahrzeug kann mit einem Getriebe ausgestattet sein, welches erlaubt, verschiedene Übersetzungsverhältnisse zwischen einer Drehzahl einer Ausgangswelle der Verbrennungskraftmaschine (z. B. Kurbelwelle) und einer Drehzahl eines Antriebsrades einzustellen. Ein Betreiben einer Antriebseinrichtung eines Hybridfahrzeuges mit einem Getriebe ist im Stand der Technik mit Problemen assoziiert. Beispielsweise kann bei einer Gangumschaltung (d. h. Umstellung des Übersetzungsverhältnisses) im Zug eine Zugkraftunterbrechung auftreten.

Eine Aufgabe der vorliegenden Erfindung ist es, ein Verfahren zum Betreiben einer Antriebseinrichtung eines Hybridfahrzeuges mit einem Getriebe bereitzustellen, wobei eine Gangumschaltung zuverlässig und sicher durchgeführt werden kann, ohne einen Fahrkomfort zu beeinträchtigen und ohne Antriebselemente des Hybridfahrzeuges einer unzulässig hohen Belastung auszusetzen.

Die Aufgabe wird durch die Gegenstände der unabhängigen Ansprüche gelöst, welche auf ein Verfahren zum Betreiben einer Antriebseinrichtung eines Hybridfahrzeuges und auf ein Hybridfahrzeug gerichtet sind.

Gemäß einem ersten Aspekt der vorliegenden Erfindung ist ein Verfahren zum Betreiben einer Antriebseinrichtung eines Hybridfahrzeuges zum Antreiben eines Antriebsrades gemäß dem unabhängigen Anspruch 1 bereitgestellt. Gemäß einem zweiten Aspekt der vorliegenden Erfindung ist ein Hybridfahrzeug gemäß Anspruch 9 bereitgestellt. Weitere Aspekte sind in den abhängigen Ansprüchen, der Zeichnung und der folgenden Beschreibung dargelegt.

Das Verfahren kann z. B. von einer Antriebseinrichtungssteuerung und/oder von einem Motorsteuergerät des Hybridfahrzeuges ausgeführt werden. Das Verfahren kann in Software und/oder Hardware implementiert werden. Insbesondere kann das Verfahren (zumindest teilweise) durch ein Softwareprogramm implementiert werden, welches in einen Speicher des Motorsteuergeräts und/oder der Antriebseinrichtungssteuerung geladen wird. Das Verfahren kann insbesondere umfassen, ein oder mehrere Steuersignale an die Verbrennungskraftmaschine und/oder die erste Elektromaschine und/oder die zweite Elektromaschine und/oder den elektrischen Akkumulator und/oder an die Hauptkupplung und/oder an das Getriebe zu übermitteln, welche diese Komponenten zum Veranlassen der spezifizierten Verfahrensschritte ansteuern. Die Ansteuersignale können optische und/oder elektrische und/oder mechanische Signale umfassen. Die Antriebseinrichtungssteuerung und/oder das Motorsteuergerät können ferner ein oder mehrere Eingangssignale empfangen, z. B. hinsichtlich von Betriebsparametern der Komponenten der Antriebseinrichtung, wie z. B. Drehzahl, Drehmoment, Leistung oder ähnliches. Auch kann das Verfahren Empfangen eines Signales umfassen, welches indikativ ist für ein Sollantriebsdrehmoment (z. B. repräsentiert durch eine Fahrpedalstellung).

Das Hybridfahrzeug kann insbesondere zwei oder vier Antriebsräder oder noch mehr Antriebsräder umfassen. Die Verbrennungskraftmaschine kann z. B. ein Dieselmotor oder ein Ottomotor sein. Die erste Elektromaschine und auch die zweite Elektromaschine können sowohl im elektromotorischen Betrieb (zum Erzeugen eines Antriebsdrehmoments) und/oder in einem generatorischen Betriebsmodus (zum Erzeugen von elektrischer Leistung, wenn sie mechanisch angetrieben sind) ausgebildet sein. Die erste Elektromaschine kann im Wesentlichen im generatorischen Betrieb eingesetzt werden und kann dementsprechend bisweilen auch als Generator bezeichnet werden. Die zweite Elektromaschine kann im Wesentlichen im elektromotorischen Betrieb eingesetzt werden und kann bisweilen auch als Traktionsmaschine und/oder als Fahrmotor bezeichnet werden.

Das Getriebe ist angeordnet und ausgebildet, eine Ausgangswelle der Verbrennungskraftmaschine mit einer Antriebswelle des Antriebsrades über verschiedene Übersetzungsverhältnisse (z. B. zwei verschiedene, drei verschiedene, vier verschiedene, fünf verschiedene, sechs verschiedene oder noch eine größere Anzahl von verschiedenen Übersetzungsverhältnissen) mechanisch zu koppeln. Das Getriebe weist dazu mindestens zwei Gänge auf. Es können z. B. zwei verschiedene Übersetzungsverhältnisse einer Drehzahl der Ausgangswelle der Verbrennungskraftmaschine und einer Drehzahl des Antriebsrades von 2,8 und 5 durch Einlegen eines ersten Ganges bzw. eines zweiten Ganges eingestellt werden. Andere Übersetzungsverhältnisse sind möglich. Im parallelen Hybridbetrieb kann bei keinem oder nur geringem Schlupf an der Hauptkupplung bei einem Übersetzungsverhältnis von i = 2,8 z. B. eine Umdrehungszahl von 1000 U/min der Verbrennungskraftmaschine einer Fahrgeschwindigkeit von ca. 42 km/h (abhängig von einem Antriebsraddurchmesser) entsprechen.

In dem parallelen Hybridbetrieb ist die Hauptkupplung (zwischen dem Getriebe und dem Antriebsrad bzw. den Antriebsrädern) geschlossen, weswegen eine Ausgangswelle des Getriebes mit der Antriebswelle des Antriebsrades mechanisch gekoppelt ist. In dem parallelen Hybridbetrieb kann das auf das Antriebsrad wirkende Fahrantriebsdrehmoment ausschließlich mittels der Verbrennungskraftmaschine erzeugt sein, die erste Elektromaschine und/oder die zweite Elektromaschine können ausgeschaltet sein, zumindest nicht zum Antriebsdrehmoment beitragen. In anderen Ausführungsformen können auch im parallelen Hybridbetrieb die erste Elektromaschine und/oder die zweite Elektromaschine zumindest teilweise zum Fahrantriebsdrehmoment beitragen (im Folgenden bisweilen auch als Boost-Betrieb bezeichnet). Der parallele Hybridbetrieb kann gegenüber dem seriellen Hybridbetrieb (insbesondere bei Erzeugung des Fahrantriebsdrehmoments ausschließlich mittels der Verbrennungskraftmaschine) als in der Regel verbrauchsoptimaler Betrieb vornehmlich durchgeführt werden.

In dem seriellen Hybridbetrieb die Hauptkupplung geöffnet, so dass ein (etwaig erzeugtes) Drehmoment der Verbrennungskraftmaschine nicht auf die Antriebswelle des Antriebsrades mechanisch übertragen wird. Stattdessen kann das von der Verbrennungskraftmaschine (etwaig erzeugte) Drehmoment und/oder die Leistung zum Antreiben der ersten Elektromaschine im generatorischen Betrieb eingesetzt werden, um dadurch elektrische Energie zu erzeugen, welche der zweiten Elektromaschine zum Bewirken des Antriebsdrehmoments zugeführt wird. Das Hybridfahrzeug bzw. dessen Antriebseinrichtung kann ausgebildet sein, neben dem parallelen Hybridbetrieb und dem seriellen Hybridbetrieb auch einen rein elektrischen Betrieb durchzuführen, in welchem das Fahrantriebsdrehmoment (insbesondere ausschließlich) mittels der zweiten Elektromaschine erzeugt wird.

Das Einstellen der Drehzahl der Verbrennungskraftmaschine kann ein kontrolliertes Zuführen von Kraftstoff (z. B. Erhöhen von zugeführtem Kraftstoff oder Vermindern von zugeführtem Kraftstoff) umfassen. Der Gangwechsel kann zugkraftneutral durchgeführt werden, insbesondere derart, dass das während des Gangwechsels bereitgestellte Fahrantriebsdrehmoment und/oder Fahrantriebsleistung einem geeignet wählbaren (z.B. durch Fahrerwunsch gewählt, z.B. mittels eines Fahrpedals) Verlauf zwischen dem vor und nach dem Gangwechsel bereitgestellten Fahrantriebsdrehmoment und/oder der Fahrantriebsleistung entspricht. Damit kann während des Gangwechsels der Fahrkomfort verbessert werden, während gleichzeitig ein verbrauchsoptimierter bzw. energieoptimierter Betrieb erreicht sein kann.

Aufgrund des Gangwechsels kann die Verbrennungskraftmaschine in Abhängigkeit eines Sollantriebsmoments und/oder einer Sollantriebsleistung und auch in Abhängigkeit einer Fahrgeschwindigkeit und/oder einer Antriebsraddrehzahl verbrauchsoptimiert und/oder energieoptimiert betrieben werden, in dem ein solcher Gang des Getriebes eingelegt wird, bei dem ein Energieverbrauch minimiert, ein Schadstoffausstoß optimiert und/oder ein kombiniertes Kriterium erfüllt wird.

Die Hauptkupplung ist nur während des seriellen Hybridbetriebs geöffnet, wohingegen während des parallelen Hybridbetriebs (im ersten Gang oder im zweiten Gang) und auch während des Wechsels von dem parallelen Hybridbetrieb im ersten Gang auf den weiteren Hybridbetrieb und auch während des Wechsels von dem weiteren Hybridbetrieb zu dem parallelen Hybridbetrieb in dem zweiten Gang die Hauptkupplung geschlossen ist.

Das Getriebe kann mehr als zwei Gänge umfassen, weitere Wechselvorgänge zwischen den anderen Gängen können analog durchgeführt werden.

Das während des Wechsels von dem ersten Gang in den zweiten Gang bereitgestellte Fahrantriebsdrehmoment kann einem geeignet wählbaren Verlauf zwischen dem vor und nach dem Gangwechsel bereitgestellten Fahrantriebsdrehmoment entsprechen. Somit kann ein Gangwechsel beispielsweise sanft, ohne Ruckeln und insbesondere ohne eine vom Fahrer ungewünschte Änderung in einer Beschleunigung oder einer Geschwindigkeit durchgeführt werden.

Das Fahrantriebsdrehmoment kann insbesondere während des gesamten Verfahrens des Wechselns von dem ersten Gang in den zweiten Gang einem Sollfahrantriebsdrehmoment entsprechen (und/oder im Wesentlichen gleichen), welches z. B. durch eine Fahrpedalstellung von einem Fahrer bzw. einer Fahrerin angefordert wird.

Die Verbrennungskraftmaschine wird mit einer Leistung betrieben, die um eine Lastpunkterhöhungsleistung über einer Sollantriebsleistung liegt. Die Sollantriebsleistung kann z. B. durch eine Pedalstellung eines Fahrpedals definiert sein und von dem Fahrer bzw. der Fahrerin vorgegeben sein. Das Verfahren umfasst ferner ein Laden des Akkumulators mit einer der Lastpunkterhöhungsleistung entsprechenden Ladeleistung, während der erste Gang eingelegt ist (und die Antriebseinrichtung in dem parallelen Hybridbetrieb arbeitet), während der Wechsel von dem ersten Gang in den zweiten Gang durchgeführt wird und während der zweite Gang eingelegt ist (und die Antriebseinrichtung wieder in dem parallelen Hybridbetrieb arbeitet). Dem Akkumulator kann somit elektrische Energie zugeführt werden und die pro Zeit zugeführte elektrische Energie kann der Ladeleistung entsprechen. Die Ladeleistung entspricht bzw. gleicht numerisch der Lastpunkterhöhungsleistung, das heißt dem Unterschied aus einer tatsächlich von der Verbrennungskraftmaschine bereitgestellten Leistung und der Leistung, welche tatsächlich an das Antriebsrad übertragen wird. Damit wird das Verfahren durchgeführt, wenn ein Nachladen des Akkumulators gewünscht ist.

Dieses Nachladen wird nicht egen eines Gangwechsels unterbrochen, sondern kontinuierlich durchgeführt und fortgesetzt.

Der Wechsel von dem ersten Gang in den zweiten Gang kann z. B. durchgeführt werden, wenn der zweite Gang ein höheres Übersetzungsverhältnis aus der Drehzahl der Verbrennungskraftmaschine und einer Drehzahl des Antriebsrades als der erste Gang hat und wenn gleichzeitig eine der folgenden Bedingungen erfüllt ist: ein Sollantriebsdrehmoment und/oder eine Sollantriebsleistung liegt oberhalb einer ersten fahrgeschwindigkeitsabhängigen Parallelhybridbetrieb-Schwelle (insbesondere Drehmomentschwelle und/oder Leistungsschwelle) für den ersten Gang oder das Sollantriebsdrehmoment und/oder die Sollantriebsleistung liegt oberhalb einer Summe aus einer ersten fahrgeschwindigkeitsabhängigen Parallelhybridbetrieb-Schwelle für den ersten Gang und einem von der ersten und/oder der zweiten Elektromaschine maximal bereitstellbaren Zusatzantriebswert (insbesondere Zusatzdrehmoment und/oder Zusatzleistung). Damit wird bei manchen Ausführungsformen erreicht, dass das Hybridfahrzeug weiter im parallelen Hybridbetrieb betrieben wird, der in der Regel gegenüber dem seriellen Hybridbetrieb verbrauchsgünstiger ist. Somit kann durch Wechseln in den zweiten Gang ein Betrieb im seriellen Hybridbetrieb (der in der Regel ungünstiger hinsichtlich einer erforderlichen Energie bzw. eines erforderlichen Kraftstoffverbrauchs ist) vermieden werden. Stattdessen kann (im parallelen Hybridbetrieb) von dem ersten Gang in den parallelen Hybridbetrieb im zweiten Gang umgeschaltet werden, um somit verbrauchsgünstig fahren zu können.

Ob zunächst im ersten Gang befindlich von der ersten Elektromaschine und/oder der zweiten Elektromaschine ein Zusatzantriebsdrehmoment zum Erreichen des Sollantriebsdrehmoments verwendet wird oder ob, sobald das Sollantriebsdrehmoment und/oder die Sollleistung oberhalb der ersten fahrgeschwindigkeitsabhängigen Parallelhybridbetrieb-Schwelle liegt, der zweite Gang eingelegt wird, kann aufgrund einer Analyse der entsprechenden Energieverbrauchswerte entschieden werden. Bevorzugterweise kann in den zweiten Gang gewechselt werden, sobald das Sollantriebsdrehmoment und/oder die Sollantriebsleistung oberhalb einer ersten fahrgeschwindigkeitsabhängigen Parallelhybridbetrieb-Schwelle für den ersten Gang liegt.

Falls das Sollantriebsdrehmoment und/oder die Sollantriebsleistung oberhalb einer zweiten fahrgeschwindigkeitsabhängigen Parallelhybridbetrieb-Schwelle für den zweiten Gang liegt (oder insbesondere für einen Gang mit höchstem Übersetzungsverhältnis), kann ein zusätzlich erforderliches Zusatzdrehmoment von der ersten und/oder der zweiten Elektromaschine bereitgestellt werden. Somit kann der parallele Hybridbetrieb ausgeweitet werden, um somit ein Wechseln in den in der Regel verbrauchsungünstigeren seriellen Betrieb hinaus zu zögern bzw. zu vermeiden. In den seriellen Hybridbetrieb kann dann gewechselt werden, wenn das Sollantriebsdrehmoment oberhalb einer Summe aus der zweiten fahrgeschwindigkeitsabhängigen Parallelhybridbetrieb-Schwelle und dem von der ersten und/oder zweiten Elektromaschine maximal bereitstellbaren Zusatzdrehmoment für den zweiten Gang liegt. Somit kann das Hybridfahrzeug verbrauchsgünstig betrieben werden.

Ausführungsformen der vorliegenden Erfindung und der Erläuterung dienende Beispiele werden nun mit Bezug auf die Zeichnungen erläutert. Die vorliegende Erfindung ist nicht auf die beschriebenen oder illustrierten Ausführungsformen, sondern durch die beigefügten Ansprüche begrenzt.
- Fig. 1: illustriert schematisch ein Hybridfahrzeug gemäß einer Ausführungsform der vorliegenden Erfindung, welches ausgebildet ist, ein Verfahren gemäß einer Ausführungsform der vorliegenden Erfindung auszuführen;
- Fig. 2: illustriert schematisch Betriebsbereiche von Betriebsmodi während eines Verfahrens zum Betreiben einer Antriebseinrichtung einschließlich eines Gangwechsels;
- Fig. 3: illustriert Kurven von von dem in Fig. 1 illustrierten Hybridfahrzeug im parallelen Hybridbetrieb bereitgestelltem Drehmoment und Leistung;
- Fig. 4: illustriert schematisch Verfahrensschritte während eines Verfahrens zum Betreiben einer Antriebseinrichtung eines Hybridfahrzeuges gemäß einem nicht erfindungsgemäßen Beispiel zur Veranschaulichung;
- Fig. 5: illustriert schematisch ein Verfahren zum Betreiben einer Antriebseinrichtung eines Hybridfahrzeuges gemäß einer Ausführungsform der vorliegenden Erfindung; und
- Fig. 6: illustriert schematisch Betriebsparameter von Komponenten einer Antriebseinrichtung während eines Verfahrens zum Betreiben der Antriebseinrichtung gemäß einer Ausführungsform der vorliegenden Erfindung.

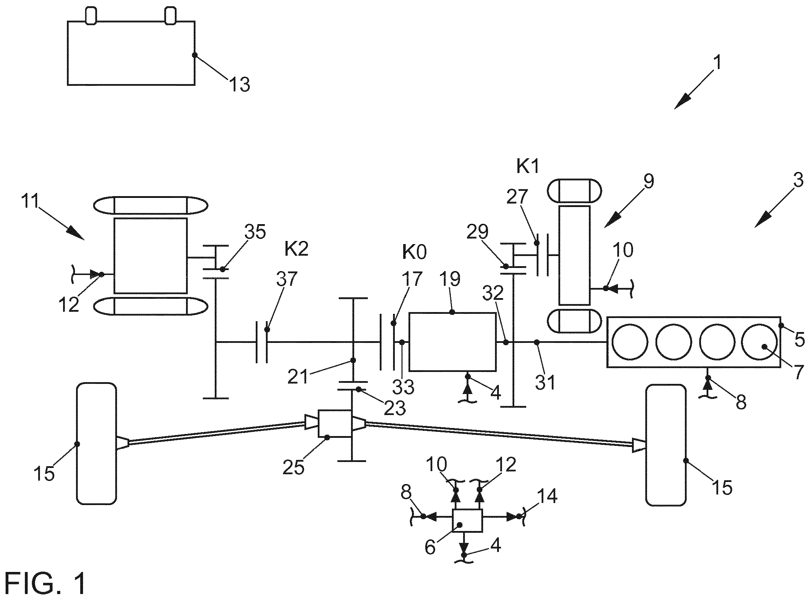

Das in Fig. 1 schematisch illustrierte Hybridfahrzeug 1 weist eine Antriebseinrichtung 3 auf sowie eine Antriebseinrichtungssteuerung 6, welche ausgebildet ist, ein Verfahren zum Steuern der Antriebseinrichtung 3 des Hybridfahrzeuges 1 gemäß einer Ausführungsform der vorliegenden Erfindung auszuführen. Die Antriebseinrichtung 3 umfasst eine Verbrennungskraftmaschine 5 mit mehreren Zylindern 7, eine erste Elektromaschine (auch als Generator bezeichnet) 9, eine zweite Elektromaschine (auch als Traktionsmaschine bezeichnet) 11 und einen Akkumulator 13, der über nicht illustrierte Energieversorgungskabel (und Leistungselektroniken) sowohl mit der ersten Elektromaschine 9 als auch der zweiten Elektromaschine 11 verbunden ist.

Die Antriebseinrichtung 3 ist zum Antrieb des Hybridfahrzeuges 1 in drei Betriebsmodi betreibbar. Erstens in einem rein elektrischen Betrieb, in dem ein Fahrantriebsdrehmoment (welches z. B. an den Antriebsrädern 15 anliegt) mittels der zweiten Elektromaschine 11 bewirkt wird, während die Verbrennungskraftmaschine 5 ausgeschaltet ist (ihr also insbesondere kein Kraftstoff aus einem nicht illustrierten Tank zugeführt wird). Zweitens ist die Antriebseinrichtung 3 in einem seriellen Hybridbetrieb betreibbar, in dem das Fahrantriebsdrehmoment mittels der zweiten Elektromaschine 11 bewirkt wird und die Verbrennungskraftmaschine 5 die erste Elektromaschine 9 zur Erzeugung von elektrischer Energie antreibt, welche wiederum der zweiten Elektromaschine 11 zugeführt wird (entweder direkt oder über den Akkumulator 13). Die Antriebseinrichtung 3 ist drittens in einem parallelen Hybridbetrieb betreibbar, in dem ein Fahrantriebsdrehmoment mittels der Verbrennungskraftmaschine 5 bewirkt wird und insbesondere die zweite Elektromaschine 11 und/oder die erste Elektromaschine 9 abgeschaltet sind.

In dem in Fig. 1 illustrierten Hybridfahrzeug 1 umfasst die Antriebseinrichtung 3 ferner eine Hauptkupplung K0 (17) sowie ein Getriebe 19, die beide zwischen der Verbrennungskraftmaschine 5 und einem Radantriebstrang 21 angeordnet sind. Der Radantriebstrang 21 ist über ein Differenzial 25 mit dazugehöriger Differenzialübersetzung 23 mit den Antriebsrädern 15 mechanisch verbunden. Die erste Elektromaschine 9 ist über eine erste Kupplung K1 (27) und über ein erstes Übersetzungselement 29 mit einer Ausgangswelle 31 der Verbrennungskraftmaschine 5 verbunden, wobei die Ausgangswelle 31 mechanisch mit einer Eingangswelle 32 des Getriebes 19 verbunden ist. Eine Ausgangswelle 33 des Getriebes 19 ist mit der Hauptkupplung K0 (17) verbunden. Die zweite Elektromaschine 11 ist über ein zweites Übersetzungselement 35 und eine zweite Kupplung K2 (37) mit dem Radantriebstrang 21 verbunden.

In dem Hybridfahrzeug 1 wird ein seriell-paralleles Hybridkonzept umgesetzt. Über eine Skalierung des Akkumulators 13 (auch als HV-Batterie bezeichnet) bezüglich des Energieinhalts und/oder der Leistung (Entlade- und Ladeleistung) kann das Hybridfahrzeug 1 als HEV (Hybrid Electric Vehicle) als auch als ein Plug-In-HEV (PHEV) ausgeführt sein. Die erste Elektromaschine 9 (auch als EM1 bezeichnet) ist z. B. bezüglich der Leistung und des Drehmoments derart dimensioniert, dass unter Berücksichtigung des Übersetzungsverhältnisses 29 von der Verbrennungskraftmaschine 5 zur ersten Elektromaschine 9 jeder mögliche verbrennungsmotorische Betriebspunkt (auch als Arbeitspunkt bezeichnet) im seriellen Betrieb eingestellt werden kann. Die zweite Elektromaschine 11 (auch als elektrischer Fahrmotor EM2 bezeichnet) ist bspw. bezüglich der Leistungsdimensionierung an die Leistungsdimensionierung der Verbrennungskraftmaschine 5 angelehnt, das heißt, sie kann eine ähnliche maximale Leistung bereitstellen.

Für einen parallelen Hybridbetrieb können Übersetzungen von der Verbrennungskraftmaschine zum Antriebsrad 15 in verschiedenartigen Weisen bzw. Ausprägungen vorgesehen sein (z. B. gestuft oder stufenlos), wobei hier mindestens eine Over-Drive-Übersetzung mit z. B. einer typischen Übersetzung von der Verbrennungskraftmaschine 5 zum Antriebsrad 15 von z. B. i = 2,8 vorgesehen ist, was bedeutet, dass, wenn sich die Ausgangswelle 31 der Verbrennungskraftmaschine 5 2,8 mal dreht, sich das Antriebsrad 15 einmal dreht.

Die Untersetzungen von dem Fahrmotor EM2 und dem Generator EM1 können in der Ausführungsform beispielsweise sowohl als Stirnradstufe als auch über ein (festgebremstes) Planetengetriebe umgesetzt werden. Über die Hauptkupplung K0 kann der parallele Leistungspfad (Welle 33) vom Antriebsrad 15 abgekoppelt werden. Der Fahrmotor EM2 und der Generator EM1 sind (optional) jeweils über die zweite Kupplung 37 (auch als K2 bezeichnet) und die erste Kupplung 27 (auch als K1 bezeichnet) abkoppelbar, um Schleppverluste zu reduzieren. Alle Kupplungen K0, K1 und K2 können beispielsweise als reibschlüssige Lammelenkupplungen und/oder formschlüssige Klauenkupplungen ausgeführt sein. Der Generator EM1 kann im Wesentlichen oder ausschließlich generatorisch arbeiten, er kann zum Start der Verbrennungskraftmaschine verwendet werden, oder er kann im parallelen Hybridbetrieb zur Boost-Unterstützung der Verbrennungskraftmaschine 5 verwendet werden. Der rein elektrische Betrieb (EV-Betrieb) und die Rekuperation können über den Fahrmotor EM2 (das heißt die zweite Elektromaschine) durchgeführt werden, während die Hauptkupplung K0 geöffnet ist und die zweite Kupplung K2 geschlossen ist.

In der folgenden Tabelle 1 sind die verschiedenen Betriebsmodi aufgeführt, in denen die Antriebseinrichtung 3 betreibbar ist, zusammen mit den jeweiligen Kopplungszuständen der Hauptkupplung K0, der ersten Kupplung K1 und der zweiten Kupplung K2.

**Tabelle 1:**

| **Betriebsmodus** | **K0** | **K1** | **K2** |
|---|---|---|---|
| EV-Betrieb | offen | beliebig | geschlossen |
| Rekuperation | offen | beliebig | geschlossen |
| Serieller Hybridbetrieb mit und ohne Lastpunktanhebung | offen | geschlossen | geschlossen |
| Paralleler Hybridbetrieb ohne Lastpunktanhebung | geschlossen | offen | offen |
| Paralleler Hybridbetrieb mit Lastpunktanhebung über EM1 | geschlossen | geschlossen | offen |
| Paralleler Hybridbetrieb mit Lastpunktanhebung über EM2 | geschlossen | offen | geschlossen |

Somit ist die Antriebseinrichtung 3 in einem rein elektrischen Betrieb (EV-Betrieb), einem seriellen Hybridbetrieb und einem parallelen Hybridbetrieb betreibbar. Sowohl der serielle Hybridbetrieb als auch der parallele Hybridbetrieb können dabei jeweils ohne oder mit Lastpunktanhebung ausgeführt werden, wie aus der obigen Tabelle 1 ersichtlich ist.

Über die direkte Anbindung der zweiten Elektromaschine 11 (EM2) an das Antriebsrad 15 sind ein effizienter elektrischer Antrieb und eine effiziente Rekuperation durchführbar.

Während des seriellen Hybridbetriebes kann auch schon bei sehr geringen Fahrzeuggeschwindigkeiten und/oder Raddrehzahlen die maximale verbrennungsmotorische Leistung zum Antrieb des Fahrzeug genutzt werden, da in diesem Fall die Hauptkupplung K0 geöffnet ist und daher die Drehzahl der Verbrennungskraftmaschine 5 unabhängig von der Fahrgeschwindigkeit optimal eingestellt werden kann. Aus dem rein elektrischen Betrieb heraus (EV-Betrieb) kann bei geöffneter Hauptkupplung K0 über die erste Elektromaschine 9 (Generator EM1) ein sehr komfortabler und zugkraftneutraler Verbrennungskraftmaschinen-Zustart erreicht werden.

Bei Bedarf einer zusätzlichen Lastpunktanhebung im parallelen Betrieb kann der dafür erforderliche generatorische Betrieb zur Erzeugung von elektrischer Leistung zur Aufladung des Akkumulators wahlweise über die zweite Elektromaschine 11 (Fahrmotor EM2) oder die erste Elektromaschine 9 (Generator EM1) durchgeführt werden. Im parallelen Hybridbetrieb ohne Bedarf einer zusätzlichen Lastpunktanhebung können in dem in Fig. 1 illustrierten Hybridfahrzeug 1 zur Minimierung der Schleppverluste die zweite Elektromaschine 11 (Fahrmotor EM2) und die erste Elektromaschine 9 (Generator EM1) durch Öffnung der zweiten Kupplung 37 (K2) und Öffnen der ersten Kupplung 27 (K1) abgekoppelt werden.

Die Auswahl des rein elektrischen Hybridbetriebs, des seriellen Hybridbetriebs und des parallelen Hybridbetriebs kann zum Zwecke der Verbrauchsminimierung die jeweiligen Effizienzen/Wirkungsgrade der Antriebsstrang-Komponenten berücksichtigen.

Das in Fig. 1 illustrierte Getriebe 19 der Antriebseinrichtung 3 kann zumindest zwei Übersetzungsverhältnisse zwischen der Eingangswelle 32 und der Ausgangswelle 33 des Getriebes 19 einstellen. Das Getriebe 19 kann z. B. ausgebildet sein zwei, drei, vier, fünf, sechs oder noch mehr verschiedene Übersetzungsverhältnisse einzustellen. Das sich unter Berücksichtigung der Differenzialübersetzung 23 einstellende (Gesamt)übersetzungsverhältnis (Eingangswelle 32 des Getriebes 19 zum Antriebsrad 15) wird im Folgenden durch "i" gekennzeichnet. Das Übersetzungsverhältnis kann z. B. zwischen 1,0 und 20 liegen, insbesondere z. B. die Werte 5,0 und 2,8 annehmen.

Die Antriebseinrichtungssteuerung 6 kann ferner Steuersignale 4 an das Getriebe 19 ausgeben, welche das Getriebe 19 steuern, einen bestimmten Gang einzulegen. Die Antriebseinrichtungssteuerung 6 ist ausgebildet, die Komponenten der Antriebseinrichtung 3, das heißt die Verbrennungskraftmaschine 5, die erste Elektromaschine 9, die mit dem Antriebsrad 15 koppelbare zweite Elektromaschine 11, den elektrischen Akkumulator 13, die Hauptkupplung K0 (17) und das Getriebe 19 während eines Verfahrens zum Betreiben einer Antriebseinrichtung anzusteuern. Die erste Elektromaschine 9 kann dabei über eine erste Kupplung K1 (27) mit der Verbrennungskraftmaschine 5 bzw. insbesondere mit einer Ausgangswelle 31 der Verbrennungskraftmaschine 5 gekoppelt sein. Die erste Elektromaschine 9 kann somit mit der Verbrennungskraftmaschine 5 koppelbar sein.

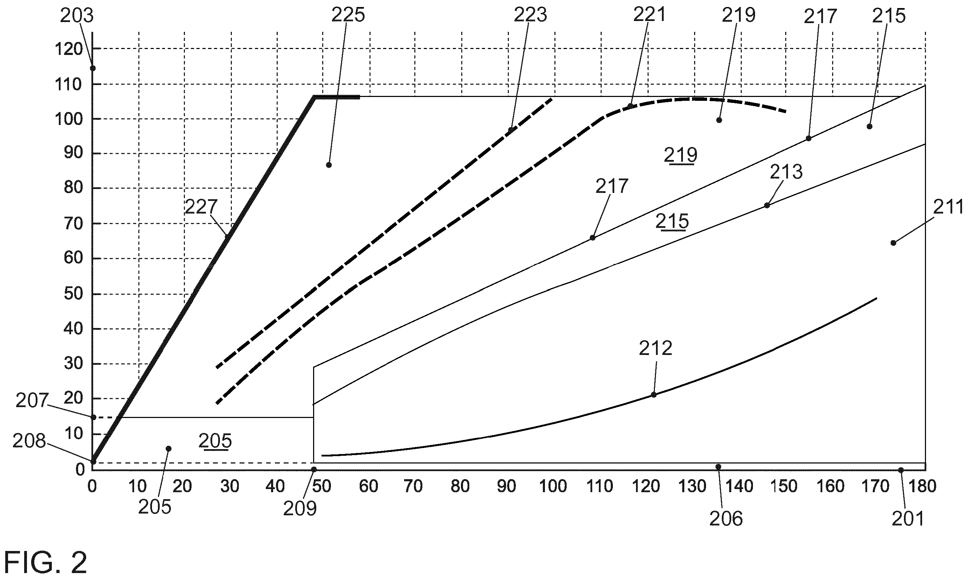

**Fig. 2** illustriert ein Koordinatensystem mit einer Abszisse 201, welche die Fahrgeschwindigkeit in der Einheit km/h aufgetragen hat, und mit einer Ordinate 203, welche die Antriebsleistung in der Einheit kW insbesondere (Soll)Fahrantriebsleistung aufgetragen hat, wobei verschiedene Betriebsmodi in verschiedenen Bereichen durchgeführt werden und wobei verschiedene Gänge in dem parallelen Hybridbetrieb eingelegt sind.

In einem Bereich 205 und in einem Bereich 206 wird ein rein elektrischer Betrieb durchgeführt, in welchem ein Fahrantriebsdrehmoment ausschließlich mittels der zweiten Elektromaschine 11 erzeugt wird. Der rein elektrische Betrieb im Bereich 205 kann insbesondere für eine Sollantriebsleistung unterhalb einer Elektrischer-Betrieb-Schwelle 207 durchgeführt werden und in dem Fall, dass die Fahrgeschwindigkeit unterhalb einer Fahrgeschwindigkeitsschwelle 209 liegt. Der rein elektrische Betrieb im Bereich 206 kann insbesondere für eine Sollantriebsleistung unterhalb einer weiteren Elektrischer-Betrieb-Schwelle 208 durchgeführt werden und in dem Fall, dass die Fahrgeschwindigkeit oberhalb einer Fahrgeschwindigkeitsschwelle 209 liegt.

Ein paralleler Hybridbetrieb in einem ersten Gang des Getriebes 19 wird in dem Bereich 211 durchgeführt, falls die Fahrgeschwindigkeit oberhalb der Fahrgeschwindigkeitsschwelle 209 liegt und unterhalb einer ersten fahrgeschwindigkeitsabhängigen Parallelhybridbetrieb-Schwelle 213 liegt. Der parallele Hybridbetrieb kann nicht nur durch ausschließliches Erzeugen des Fahrantriebsdrehmoments mittels der Verbrennungskraftmaschine 5 im ersten Gang betrieben werden, sondern weiterhin in einem Bereich 215 betrieben werden, in welchem die erste Elektromaschine 9 und/oder die zweite Elektromaschine 11 ferner (neben der Verbrennungskraftmaschine 5) zu dem Fahrantriebsdrehmoment beiträgt. Die Linie 217 ist somit als eine Summe der ersten Parallelhybridbetrieb-Schwelle 213 und eines von der ersten Elektromaschine 9 und/oder der zweiten Elektromaschine 11 erzeugbarem Zusatzantrieb definiert.

Liegt eine Sollantriebsleistung oberhalb der Linie 217, so wird gemäß einer Ausführungsform der vorliegenden Erfindung von dem ersten Gang in dem Bereich 211, 215 in den zweiten Gang des Getriebes 19 in dem Bereich 219 umgeschaltet, das Hybridfahrzeug wird damit weiterhin in dem parallelen Hybridbetrieb betrieben. Die Linie 221 kennzeichnet eine zweite fahrgeschwindigkeitsabhängige Parallelhybridbetrieb-Schwelle, welche der maximal erzeugbaren Antriebsleistung und/oder dem maximal erzeugbaren Drehmoment der Verbrennungskraftmaschine 5 entspricht. Auch im zweiten Gang kann das Fahrantriebsdrehmoment zumindest teilweise durch die erste Elektromaschine 9 und/oder die zweite Elektromaschine 11 bereitgestellt werden, wodurch sich die Grenze des parallelen Hybridbetriebs im zweiten Gang bis zur Linie 223 verschieben kann, welche oberhalb der Linie 221 liegt.

Oberhalb der Linie 223 wird das Hybridfahrzeug in dem Bereich 225 in dem seriellen Betrieb betrieben, wobei das Fahrantriebsdrehmoment (insbesondere ausschließlich) mittels der zweiten Elektromaschine 11 bereitgestellt ist, während die Verbrennungskraftmaschine 5 die erste Elektromaschine 9 im generatorischen Betrieb zur Erzeugung von elektrischer Energie antreibt, welche der zweiten Elektromaschine 11 zur Verfügung gestellt wird. Der Bereich 225 ist durch die Linie 227 nach oben begrenzt, welche der maximal von der zweiten Elektromaschine 11 erzeugbaren Antriebsleistung entspricht.

Neben einer relativ langen Overdrive-Übersetzung von der Verbrennungskraftmaschine 5 zu dem Antriebsrad 15 (Übersetzungsverhältnis i = 2,8, was typischerweise einer Geschwindigkeit von ca. 42 km/h bei einer Drehzahl der Verbrennungskraftmaschine 5 von 1000 U/min entspricht) ermöglicht das Getriebe 19 auch zumindest eine zweite mittlere und damit etwas kürzere Übersetzung einzustellen. Das Übersetzungsverhältnis des zweiten Gangs kann z. B. bei i = 5,0 liegen, was ca. 24 km/h bei einer Drehzahl der Verbrennungskraftmaschine 5 von 1000 U/min entspricht. Weitere Ausführungsbeispiele können noch weitere Gänge oder noch andere Übersetzungsverhältnisse berücksichtigen bzw. unterstützen.

Durch zumindest einen zusätzlichen parallelen Gang (das heißt dem zweiten Gang neben dem ersten Gang) kann der effiziente parallele Hybridbetrieb bei niedrigen Geschwindigkeiten zu höheren darstellbaren Sollantriebsleistungen ausgedehnt werden, das heißt insbesondere auf den Bereich 219 der Fig. 2 ausgedehnt werden. Alternativ zu einer Definition der Betriebsmodi in den verschiedenen Gängen in Abhängigkeit der Geschwindigkeit und der (Soll)Antriebsleistung wie in Fig. 2 dargestellt ist, können die verschiedenen Betriebsmodi mit den verschiedenen Gängen in Abhängigkeit von z. B. (Soll)Antriebsdrehmoment und Fahrzeuggeschwindigkeit bzw. Antriebsraddrehzahl dargestellt werden.

Die Kurve 212 repräsentiert den Fahrwiderstand bei Konstantgeschwindigkeitsfahrt in der Ebene.

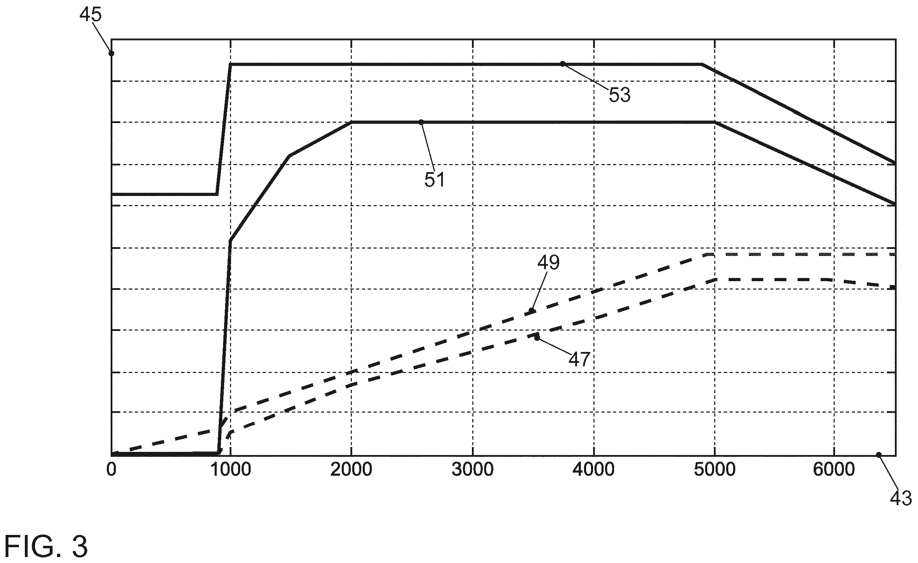

**Fig. 3** illustriert ferner die Bereitstellung von Zusatzantriebsmoment bzw. Zusatzleistung mittels der ersten Elektromaschine und/oder der zweiten Elektromaschine. Fig. 3 illustriert für den parallelen Hybridbetrieb in einem Koordinatensystem mit einer Abszisse 43, welche die Drehzahl der Verbrennungskraftmaschine 5 in der Einheit 1/min illustriert, und mit einer Ordinate 45, welche die Leistung in der Einheit kW und/oder das Drehmoment in der Einheit Nm anzeigt, welches an der Eingangswelle 32 des Getriebes 19 anliegt, eine Leistung 47 der Verbrennungskraftmaschine 5, eine Systemleistung 49, ein Drehmoment 51 der Verbrennungskraftmaschine 5 sowie ein Systemdrehmoment 53 der jeweiligen gesamten Antriebseinrichtung 3. Die Systemleistung 49 und das Systemdrehmoment 53 sind unter Berücksichtigung einer elektrischen Boost-Unterstützung durch den Generator EM1 (und/oder den Fahrmotor EM2) definiert. Leistungs- und Drehmomentanforderungen (das heißt Sollleistungen bzw. Solldrehmomente) oberhalb der verbrennungsmotorischen Volllast können somit im parallelen Hybridbetrieb bis zur definierten Systemleistung 49 und bis zum definierten Systemdrehmoment 53 über einen kombinierten verbrennungs- und elektromotorischen Betrieb mit entsprechender elektrischen Leistungsentnahme aus dem Akkumulator (HV-Batterie) 13 dargestellt werden.

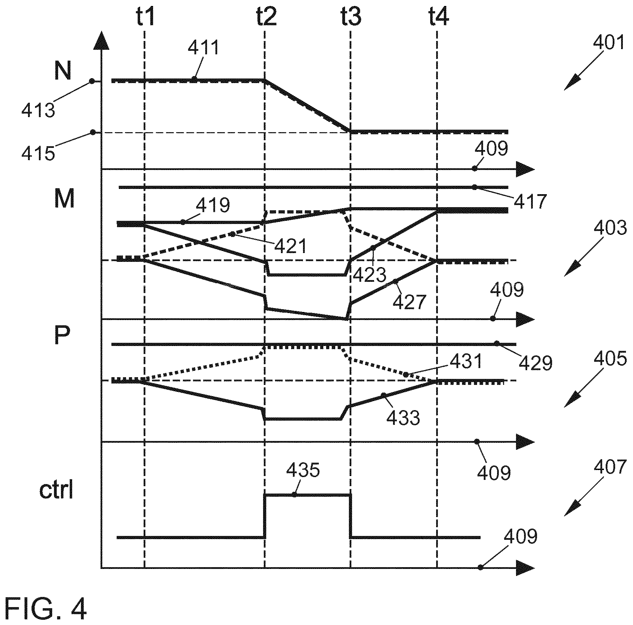

**Fig. 4** illustriert Betriebsparameter während eines nicht erfindungsgemäßen Verfahrens zum Betreiben der Antriebseinrichtung 3 des Hybridfahrzeuges 1. Der Wechsel von einem ersten Gang zu einem zweiten Gang kann zugkraftneutral durchgeführt werden, wobei kurzzeitig ein serieller Betrieb ("virtueller Zwischengang") durchgeführt wird.

Die Graphen 401, 403, 405, 407 illustrieren Drehzahl, Drehmoment, Leistung bzw. Steuersignal in Abhängigkeit der auf der Abszisse 409 aufgetragenen Zeit während des Verfahrensablaufs. Die Drehzahl 411 der Verbrennungskraftmaschine 5 bzw. der ersten Elektromaschine 9 wird zwischen einem zweiten Zeitpunkt t2 und einem dritten Zeitpunkt t3 von einer ersten Drehzahl 413 auf eine zweite Drehzahl 415 abgesenkt. In anderen Ausführungsformen wird die Drehzahl erhöht, je nach Übersetzungsverhältnis des ersten Ganges und/oder des zweiten Ganges. In dem Graphen 403 illustriert die Kurve 417 das Drehmoment am Antriebsrad, illustriert die Kurve 419 das Drehmoment der Verbrennungskraftmaschine 5, illustriert die Kurve 421 das Drehmoment der zweiten Elektromaschine 11 (der Traktionsmaschine), illustriert die Kurve 423 die Summe der Momente der ersten Elektromaschine 9 (des Generators) und der Verbrennungskraftmaschine 5 und illustriert die Kurve 427 das Drehmoment der ersten Elektromaschine 9.

In dem Graphen 405 illustriert die Kurve 429 die Leistung der Verbrennungskraftmaschine 5, illustriert die Kurve 431 die Leistung der zweiten Elektromaschine 11 und illustriert die Kurve 433 die Leistung der ersten Elektromaschine 9.

In dem Graphen 407 illustriert die Kurve 435 den Verlauf der Steuersignale an die Hauptkupplung K0 (17), welche von der Antriebseinrichtungssteuerung 6 erzeugt und an die Hauptkupplung K0 übermittelt werden.

Zeitweise deckungsgleiche (d. h. übereinander liegende) Kurven sind zur besseren Lesbarkeit (teilweise) mit geringfügigen Abständen zueinander bzgl. der Abszissen aufgetragen.

Dargestellt ist in Fig. 4 ein Gangwechsel von einem niedrigen in einen hohen Gang. In dem gezeigten Fall handelt es sich um einen Fahrbetrieb mit konstanter Fahrgeschwindigkeit, das heißt Antriebsraddrehzahl und Antriebsradmoment (sowie in Folge dessen auch die Antriebsradleistung) sind konstant. Vor dem ersten Zeitpunkt t1 wird der Vortrieb allein durch die Verbrennungskraftmaschine 5 erzeugt. Zur Vereinfachung ist hier keine Lastpunkterhöhung berücksichtigt, gemäß der Erfindung wird jedoch vor, während und nach dem Gangwechsel eine Lastpunkterhöhung zum Laden des Akkumulators 13 durchgeführt.

Zum ersten Zeitpunkt t1 erfolgt ein Schaltkommando. Daraufhin behält die Verbrennungskraftmaschine 5 ihre Leistung bei und hält auch zunächst das Drehmoment bei. Ferner beginnt die erste Elektromaschine 9 generatorische Leistung bzw. generatorisches Drehmoment aufzubauen, was eine entsprechende Reduktion des über den mechanischen Pfad über die Hauptkupplung K0 auf das Antriebsrad 15 übertragende Drehmoment bzw. Leistung zur Folge hat. Die generatorisch erzeugte Leistung wird von der zweiten Elektromaschine 11 (Traktionsmaschine) in ein elektromotorisch erzeugtes Drehmoment überführt und auf das Antriebsrad 15 übertragen. Dadurch bleibt die Summenradleistung und/oder das Antriebsraddrehmoment konstant.

Zu einem zweiten Zeitpunkt t2 ist die Hauptkupplung K0 (17) drehmoment- und damit lastfrei. (Das Summenmoment des Drehmoments von der Verbrennungskraftmaschine 5 und der ersten Elektromaschine 9 ist Null). Zunächst wird die Hauptkupplung K0 (17) geöffnet. Dann werden die zweite Elektromaschine 11 und die erste Elektromaschine 9 durch eine Reduktion deren Summenmoments auf die Synchrondrehzahl des Zielgangs gebracht. Während die Drehzahl von der Kombination von Verbrennungskraftmaschine 5 und erster Elektromaschine 9 sinkt, muss deren Moment angehoben werden, damit die Leistung erhalten bleibt. Das Vortriebsmoment zwischen dem zweiten Zeitpunkt t2 und einem dritten Zeitpunkt t3 wird allein von der zweiten Elektromaschine 11 aufgebracht.

Zu dem dritten Zeitpunkt t3 ist die Synchrondrehzahl 415 für den zweiten Gang erreicht. Das Summenmoment von der Kombination Verbrennungskraftmaschine 5 und erster Elektromaschine 9 ist Null und somit die Hauptkupplung K0 (17) drehmoment- und lastfrei, weswegen die Hauptkupplung K0 (17) ruckfrei geschlossen werden kann. Nachdem die Hauptkupplung K0 (17) geschlossen worden ist, wird das generatorische Drehmoment der ersten Elektromaschine 9 herausgefahren, während das Drehmoment der Verbrennungskraftmaschine 5 erhalten bleibt. Daher beginnt nun wieder Drehmoment über die Hauptkupplung K0 (17) zu fließen und das Fahrzeug wird von der Verbrennungskraftmaschine 5 und dem elektrischen Pfad erste Elektromaschine 9 zu zweiter Elektromaschine 11 angetrieben.

Zu einem vierten Zeitpunkt t4 fährt das Hybridfahrzeug wieder vollständig über ein von der Verbrennungskraftmaschine 5 erzeugtes Fahrantriebsmoment im neuen Gang (so wie es vor dem ersten Zeitpunkt t1 im alten Gang fuhr).

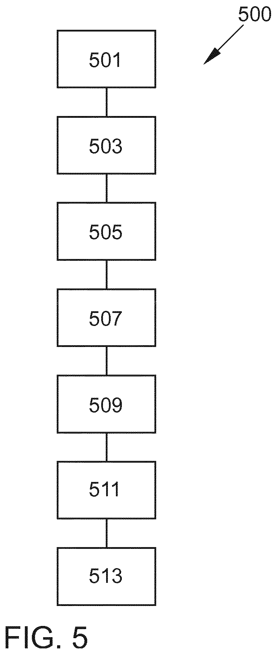

**Fig. 5** illustriert Verfahrensschritte eines Verfahrens 500 zum Betreiben einer Antriebseinrichtung (z. B. Antriebseinrichtung 3, wie sie in Fig. 1 dargestellt ist) eines Hybridfahrzeuges gemäß einer Ausführungsform der vorliegenden Erfindung. In einem Verfahrensschritt 501 wird, während ein erster Gang des Getriebes (z. B. das Getriebe 19 der Fig. 1) eingelegt ist, die Antriebseinrichtung bei einer ersten Drehzahl (z. B. 413 der Fig. 4) für den ersten Gang in einem parallelen Hybridbetrieb betrieben, indem bei geschlossener Hauptkupplung (z. B. Hauptkupplung K0 (17) der Fig. 1) ein auf das Antriebsrad (z. B. Antriebsrad 15 der Fig. 1) wirkendes Fahrantriebsmoment mittels der Verbrennungskraftmaschine (z. B. Verbrennungskraftmaschine 5 der Fig. 1) erzeugt wird.

In einem weiteren Verfahrensschritt 503 wird von dem parallelen Hybridbetrieb in einen seriellen Hybridbetrieb gewechselt, in dem die Verbrennungskraftmaschine (z. B. Verbrennungskraftmaschine 5 der Fig. 1) die erste Elektromaschine (z. B. die erste Elektromaschine 9 der Fig. 1) zur Erzeugung von elektrischer Energie antreibt, welche von der zweiten Elektromaschine (z. B. die zweite Elektromaschine 11 der Fig. 1) verwendet wird, um das Fahrantriebsdrehmoment zu bewirken.

In einem weiteren Verfahrensschritt 505 wird die Hauptkupplung (z. B. Hauptkupplung K0 (17) der Fig. 1) geöffnet. In einem weiteren Verfahrensschritt 507 wird eine Drehzahl der Verbrennungskraftmaschine (z. B. Verbrennungskraftmaschine 5 der Fig. 1) bei geöffneter Hauptkupplung auf eine zweite Drehzahl (z. B. Drehzahl 415 der Fig. 4) für einen zweiten Gang des Getriebes (z. B. Getriebe 19 der Fig. 1) in den parallelen Hybridbetrieb eingestellt.

In einem weiteren Verfahrensschritt 509 wird der zweite Gang des Getriebes (z. B. das Getriebe 19 der Fig. 1) eingelegt. Ferner wird in einem weiteren Verfahrensschritt 511 die Hauptkupplung (z. B. Hauptkupplung K0 (17) der Fig. 1) geschlossen und in einem weiteren Verfahrensschritt 513 von dem seriellen Hybridbetrieb in den parallelen Hybridbetrieb gewechselt, während der zweite Gang eingelegt ist.

Die Verbrennungskraftmaschine wird mit einer Leistung betrieben, die um eine Lastpunkterhöhungsleistung über einer Sollantriebsleistung liegt, wobei der Akkumulator (13) mit einer der Lastpunkterhöhungsleistung entsprechenden Ladeleistung geladen wird, während der erste Gang eingelegt ist, während der Wechsel von dem ersten Gang in den zweiten Gang durchgeführt wird und während der zweite Gang eingelegt ist.

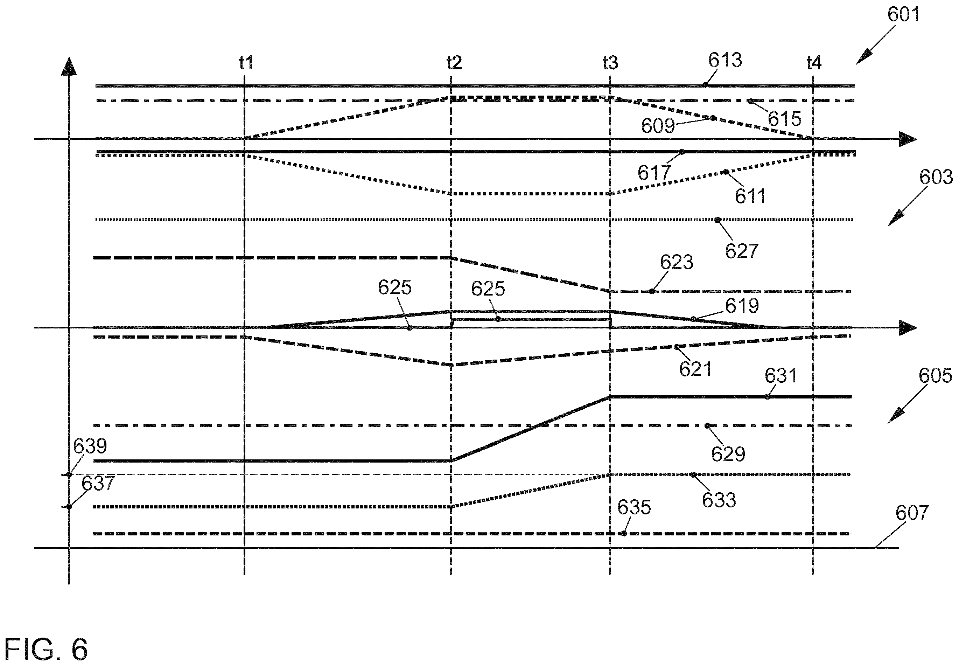

**Fig. 6** illustriert Betriebsparameter einer Antriebseinrichtung (z. B. der in Fig. 1 dargestellten Antriebseinrichtung 3) während eines Verfahrens zum Betreiben einer Antriebseinrichtung eines Hybridfahrzeuges gemäß einer Ausführungsform der vorliegenden Erfindung. Graphen 601, 603, 605 illustrieren eine Leistung in der Einheit kW, ein Drehmoment in der Einheit Nm bzw. eine Drehzahl in der Einheit 1/min von Komponenten der Antriebseinrichtung in Abhängigkeit von auf der Abszisse 607 aufgetragener Zeit.

In dem Graphen 601 kennzeichnet eine Kurve 609 eine Leistung der zweiten Elektromaschine 11, kennzeichnet eine Kurve 611 eine Leistung der ersten Elektromaschine 9, kennzeichnet eine Kurve 613 eine (Fahr-)Leistung der Verbrennungskraftmaschine 5, kennzeichnet eine Kurve 615 eine Leistung des Antriebsrades 15 und kennzeichnet eine Kurve 617 eine Leistung des Akkumulators 13. Abgegebene Leistungen sind positiv, aufgenommene Leistungen sind negativ.

In dem Graphen 603 illustriert eine Kurve 619 ein Drehmoment der zweiten Elektromaschine 11, illustriert eine Kurve 621 ein Drehmoment der ersten Elektromaschine 9, illustriert eine Kurve 623 ein Fahrdrehmoment der Verbrennungskraftmaschine 5, illustriert eine Kurve 625 ein Drehmoment der Verbrennungskraftmaschine zur Drehzahlanhebung und illustriert eine Kurve 627 ein Drehmoment des Antriebsrades 15.

In dem Graphen 605 illustriert eine Kurve 629 eine Drehzahl der zweiten Elektromaschine 11, illustriert eine Kurve 631 eine Drehzahl der ersten Elektromaschine 9, illustriert eine Kurve 633 eine Drehzahl der Verbrennungskraftmaschine 5 und illustriert eine Kurve 635 eine Drehzahl des Antriebsrades 15.

Zeitweise deckungsgleiche (d. h. übereinander liegende) Kurven sind zur besseren Lesbarkeit (teilweise) mit geringfügigen Abständen zueinander bzgl. der Abszissen aufgetragen.

Bis zu dem ersten Zeitpunkt t1 liegt der Betriebsmodus paralleler Hybridbetrieb im ersten Gang (hier gemäß der Erfindung mit Lastpunktanhebung dargestellt, andere Beispiele, die nicht von der Erfindung erfasst sind, verzichten auf eine Lastpunktanhebung) vor. Hierbei wird somit das Fahrantriebsdrehmoment und/oder die Fahrantriebsleistung (insbesondere ausschließlich) mittels der Verbrennungskraftmaschine 5 erzeugt. In dem in Fig. 6 illustrierten Ausführungsbeispiel handelt es sich um eine Konstantfahrgeschwindigkeit in der Ebene, das heißt Antriebsraddrehzahl und Antriebsradmoment (sowie in Folge dessen auch die Radleistung) sind konstant. Die Hauptkupplung K0 (17), auch als Trennkupplung bezeichnet, ist zwischen dem ersten Zeitpunkt t1 und dem zweiten Zeitpunkt t2 geschlossen. Die Einheit aus Verbrennungskraftmaschine 5 und erster Elektromaschine 9 sind bezüglich ihrer Drehzahlen gemäß dem parallelen Übersetzungsverhältnis des ersten Ganges (Verbrennungskraftmaschine zu Antriebsrad bzw. Generator zu Rad) mechanisch fest an das Antriebsrad 15 gekoppelt. Die geforderte Antriebsleistung (das heißt Sollantriebsleistung sowie die (optionale) zusätzliche Ladeleistung für den Akkumulator 30) werden durch die Verbrennungskraftmaschine bereitgestellt. Der Generator 9 stellt dabei ein generatorisches Drehmoment zur Umsetzung der Lastpunktanhebung (Nachladung des Akkumulators 13) bereit.

Der Gangwechsel (von dem ersten Gang zu einem zweiten Gang) beginnt zum ersten Zeitpunkt t1 mit einem vom Hybridkoordinator gegebenen Kommando. Dazu wird zunächst bis zu dem zweiten Zeitpunkt t2 der parallele Hybridbetrieb auf einen weiteren Hybridbetrieb umgelagert (leistungsverzweigter Hybridbetrieb). Die Steuerung der ersten Elektromaschine 9 baut kontinuierlich zusätzliches generatorisches Drehmoment auf. Entsprechend dem zusätzlichen Drehmomentaufbau an der ersten Elektromaschine 9 kann dann kontinuierlich verbrennungsmotorische Leistung in elektrische Leistung gewandelt werden, die unter Beibehaltung der Nachladung des Akkumulators 13 unmittelbar auf den Fahrmotor zur Darstellung der Antriebsradleistung bzw. zur Darstellung der geforderten Antriebsleistung übertragen wird. In Folge dessen kann die mechanische Leistungsübertragung über die Hauptkupplung K0 (17) zur Darstellung der geforderten Antriebsleistung sukzessive auf Null reduziert werden, bis zu dem zweiten Zeitpunkt t2 die geforderte Antriebsleistung ausschließlich über den weiteren Hybridbetrieb mit Lastpunktanhebung bereitgestellt wird, wobei das Fahrantriebsmoment ausschließlich von der zweiten Elektromaschine 11 bereitgestellt wird.

Zum zweiten Zeitpunkt t2 ist die Hauptkupplung K0 (17) vollständig lastfrei und kann daher geöffnet werden. Nach dem Öffnen der Hauptkupplung K0 (17) wird die Drehzahl der Verbrennungskraftmaschine 5 von der ersten Drehzahl 637 auf eine zweite Drehzahl 639, das heißt eine Zieldrehzahl für den zweiten Gang, überführt (serieller Betrieb mit Drehzahlverstellung VM). In dem hier dargestellten Ausführungsbeispiel handelt es sich um einen Wechsel in einen zweiten Gang mit höherem Übersetzungsverhältnis von Verbrennungskraftmaschine zu Antriebsrad (bzw. erster Elektromaschine 9 zu Antriebsrad 15) als beim ersten Gang. Entsprechend ist eine Drehzahlanhebung erforderlich. Dazu stellt die Verbrennungskraftmaschine 5 über eine eigene Kraftstoffeinspritzung zusätzliches Drehmoment zur Darstellung einer Drehzahlanhebung der Einheit aus Verbrennungskraftmaschine 5 und erster Elektromaschine 9 bereit. Zu dem dritten Zeitpunkt t3 hat sich die Zieldrehzahl der Verbrennungskraftmaschine 5 für den zweiten Gang mit entsprechend geänderten Drehmomenten von Verbrennungskraftmaschine 5 und erster Elektromaschine 9 eingestellt. Das erforderliche Verbrennungskraftmaschine-Drehmoment zur Drehzahlanhebung kann wieder zurückgenommen werden.

Zu dem dritten Zeitpunkt t3 wird die Hauptkupplung K0 (17) wieder geschlossen. Nun erfolgt die Umlagerung vom weiteren Hybridbetrieb zurück auf einen parallelen Hybridbetrieb (leistungsverzweigter Hybridbetrieb). Dazu wird kontinuierlich das erste Elektromaschinen-Drehmoment (und in Folge dessen auch die von der zweiten Elektromaschine 11 übertragene elektrische Leistung) zurückgenommen. Entsprechend wird die mechanische Leistungsübertragung über die Hauptkupplung K0 (17) zur Darstellung der geforderten Antriebsleistung sukzessive wieder gesteigert, bis zum vierten Zeitpunkt t4 die geforderte Antriebsleistung ausschließlich über einen parallelen Hybridbetrieb mit Lastpunktanhebung bereitgestellt wird. Der Gangwechsel ist damit zum vierten Zeitpunkt t4 abgeschlossen. Ab dem vierten Zeitpunkt t4 liegt daher der Betriebsmodus paralleler Hybridbetrieb im zweiten Gang mit Lastpunktanhebung vor.

Während des gesamten Vorgangs zwischen dem ersten Zeitpunkt t1 und dem vierten Zeitpunkt t4 bleiben die Antriebsraddrehzahl und das Antriebsradmoment (sowie in Folge dessen auch die Antriebsradleistung) konstant, so dass der Gangwechsel ohne Zugkraftunterbrechung durchgeführt werden kann. Der gesamte Vorgang kann eine Zeitdauer von zwischen 0,1 Sekunden und 2 Sekunden, insbesondere ungefähr 0,4 Sekunden andauern (Zeitdauer von dem ersten Zeitpunkt t1 bis zum vierten Zeitpunkt t4).

### Bezugszeichenliste

- 1: Hybridfahrzeug
- 3: Antriebseinrichtung
- 5: Verbrennungskraftmaschine
- 6: Antriebseinrichtungssteuerung
- 7: Zylinder
- 8: Steuersignal
- 9: erste Elektromaschine
- 10: Steuersignal
- 11: zweite Elektromaschine
- 12: Steuersignal
- 13: Akkumulator
- 14: Steuersignal
- 15: Antriebsrad
- 17: Hauptkupplung K0
- 19: Getriebe
- 21: Radantriebstrang
- 23: Differenzialübersetzung
- 25: Differenzial
- 27: erste Kupplung K1
- 29: Übersetzungselement
- 31: Ausgangswelle Verbrennungskraftmaschine
- 32: Eingangswelle Getriebe
- 33: Ausgangswelle Getriebe
- 35: Übersetzungselement
- 37: zweite Kupplung K2
- 43: Abszisse
- 45: Ordinate
- 47: Verbrennungskraftmaschine-Leistung
- 49: Systemleistung
- 51: Verbrennungskraftmaschine-Drehmoment
- 53: Systemdrehmoment
- 201: Abszisse
- 203: Ordinate
- 205: Bereich eines rein elektrischen Betriebs
- 206: weiterer Bereich eines rein elektrischen Betriebs
- 207: Elektrischer-Betrieb-Sollantriebsleistungsschwelle
- 208: weitere Elektrischer-Betrieb-Sollantriebsleistungsschwelle
- 209: Fahrgeschwindigkeitsschwelle
- 211: Bereich parallelen Hybridbetriebs im ersten Gang
- 212: Fahrwiderstand bei Konstantgeschwindigkeitsfahrt in der Ebene
- 213: erste Parallelhybridbetrieb-Schwelle
- 215: Boost-Bereich
- 217: Schwelle für parallelen Betrieb im ersten Gang
- 219: Bereich parallelen Hybridbetriebs im zweiten Gang
- 221: zweite Parallelhybridbetrieb-Schwelle
- 223: Grenze des parallelen Hybridbetriebs im zweiten Gang
- 225: Bereich seriellen Hybridbetriebs
- 227: Grenze des seriellen Hybridbetriebs
- 401: Graph
- 403: Graph
- 405: Graph
- 407: Graph
- 409: Abszisse
- 413: erste Drehzahl
- 415: zweite Drehzahl
- 417: Kurve
- 419: Kurve
- 421: Kurve
- 423: Kurve
- 425: Kurve
- 427: Kurve
- 429: Kurve
- 431: Kurve
- 433: Kurve
- 435: Kurve
- 500: Verfahren
- 501: Verfahrensschritt
- 503: Verfahrensschritt
- 505: Verfahrensschritt
- 507: Verfahrensschritt
- 509: Verfahrensschritt
- 511: Verfahrensschritt
- 513: Verfahrensschritt
- 601: Graph
- 603: Graph
- 605: Graph
- 607: Abszisse
- 609: Kurve
- 611: Kurve
- 613: Kurve
- 615: Kurve
- 617: Kurve
- 619: Kurve
- 621: Kurve
- 623: Kurve
- 625: Kurve
- 627: Kurve
- 629: Kurve
- 631: Kurve
- 633: Kurve
- 635: Kurve
- 637: erste Drehzahl
- 639: zweite Drehzahl

## Patentansprüche

1. Verfahren zum Betreiben einer Antriebseinrichtung (3) eines Hybridfahrzeuges (1) zum Antreiben eines Antriebsrades (15), wobei die Antriebseinrichtung eine Verbrennungskraftmaschine (5), eine mit der Verbrennungskraftmaschine (5) gekoppelte erste Elektromaschine (9), eine mit dem Antriebsrad koppelbare zweite Elektromaschine (11) sowie einen elektrischen Akkumulator (13) umfasst und ferner eine Hauptkupplung (17, K0) und ein Getriebe (19) umfasst, die zwischen der Verbrennungskraftmaschine (5) und dem Antriebsrad angeordnet sind, wobei das Verfahren aufweist:
während ein erster Gang des Getriebes (19) eingelegt ist, Betreiben (501) der Verbrennungskraftmaschine (5) bei einer ersten Drehzahl (637, 413) für den ersten Gang in einem parallelen Hybridbetrieb, in dem bei geschlossener Hauptkupplung (K0) ein auf das Antriebsrad (15) wirkendes Fahrantriebsdrehmoment mittels der Verbrennungskraftmaschine (5) erzeugt wird;
Wechseln (503), während die Hauptkupplung (K0) geschlossen ist, in einen weiteren Hybridbetrieb, in dem die Verbrennungskraftmaschine (5) die erste Elektromaschine (9) zur Erzeugung von elektrischer Energie antreibt, und in dem die zweite Elektromaschine (11) die von der ersten Elektromaschine (9) erzeugte elektrische Energie in das Fahrantriebsdrehmoment überführt;
Öffnen (505) der Hauptkupplung (K0), während ein Summenmoment eines Drehmoments von der Verbrennungskraftmaschine (5) und der ersten Elektromaschine (9) Null ist;
Einstellen (507) einer Drehzahl der Verbrennungskraftmaschine (5) bei geöffneter Hauptkupplung auf eine zweite Drehzahl (639, 415) für einen zweiten Gang des Getriebes (19) in dem parallelen Hybridbetrieb, wobei die zweite Drehzahl (639, 415) eine Synchrondrehzahl (415) für den zweiten Gang ist;
Einlegen (509) des zweiten Ganges des Getriebes (19);
Schließen (511) der Hauptkupplung (K0), während das Summenmoment des Drehmoments von der Verbrennungskraftmaschine (5) und der ersten Elektromaschine (9) Null ist; und
Wechseln (513) in den parallelen Hybridbetrieb, während der zweite Gang eingelegt ist; wobei die Verbrennungskraftmaschine mit einer Leistung betrieben wird, die um eine Lastpunkterhöhungsleistung über einer Sollantriebsleistung liegt, wobei das Verfahren ferner umfasst:
Laden des Akkumulators (13) mit einer der Lastpunkterhöhungsleistung entsprechenden Ladeleistung, während der erste Gang eingelegt ist, während der Wechsel von dem ersten Gang in den zweiten Gang durchgeführt wird und während der zweite Gang eingelegt ist.

2. Verfahren gemäß Anspruch 1, wobei das Wechseln in den weiteren Hybridbetrieb zwischen einem ersten Zeitpunkt (t1) und einem zweiten Zeitpunkt (t2) durchgeführt wird und wobei das Wechseln aufweist:
ab dem ersten Zeitpunkt (t1) Antreiben der ersten Elektromaschine (9) mittels der Verbrennungskraftmaschine (5), um eine zeitlich zunehmende elektrische Energie zu erzeugen, die der zweiten Elektromaschine (11) zugeführt wird, um ein zeitlich zunehmendes Drehmoment zu erzeugen, welches zusammen mit einem an der Hauptkupplung (17, K0) zeitlich abnehmenden von der Verbrennungskraftmaschine (5) erzeugten Drehmoment das Fahrantriebsdrehmoment bereitstellt;
ab dem zweiten Zeitpunkt (t2) ausschließliches Erzeugen des Fahrantriebsdrehmoments mittels der zweiten Elektromaschine (11).

3. Verfahren gemäß Anspruch 1 oder 2, wobei das Wechseln in den parallelen Hybridbetrieb zwischen einem dritten Zeitpunkt (t3) und einem vierten Zeitpunkt (t4) durchgeführt wird und aufweist:
ab dem dritten Zeitpunkt (t3) Erzeugen einer zeitlich abnehmenden elektrischen Energie mittels der ersten Elektromaschine (9) im von der Verbrennungskraftmaschine (5) angetriebenen generatorischen Betrieb, die der zweiten Elektromaschine (11) zugeführt wird, um ein zeitlich abnehmendes Drehmoment zu erzeugen, welches zusammen mit einem an der Hauptkupplung (17, K0) zeitlich zunehmenden von der Verbrennungskraftmaschine (5) erzeugten Drehmoment das Fahrantriebsdrehmoment bereitstellt;
ab dem vierten Zeitpunkt (t4) ausschließliches Erzeugen des Fahrantriebsdrehmoments mittels der Verbrennungskraftmaschine (5).

4. Verfahren gemäß dem vorangehenden Anspruch, wenn auf Anspruch 2 zurückbezogen, wobei das Einstellen der Drehzahl der Verbrennungskraftmaschine (5) zwischen dem zweiten Zeitpunkt und dem dritten Zeitpunkt durchgeführt wird und aufweist:
falls die zweite Drehzahl (639) höher ist als die erste Drehzahl (637): ab dem zweiten Zeitpunkt Erhöhen der Kraftstoffzufuhr an die Verbrennungskraftmaschine (5);
falls die zweite Drehzahl (415) niedriger ist als die erste Drehzahl (413): ab dem zweiten Zeitpunkt Vermindern der Kraftstoffzufuhr an die Verbrennungskraftmaschine (5).

5. Verfahren gemäß einem der vorangehenden Ansprüche, wobei die zweite Drehzahl (415, 639) basierend auf einem Übersetzungsverhältnis des ersten Ganges, einem Übersetzungsverhältnis des zweiten Ganges und der ersten Drehzahl (413, 637) bestimmt ist.

6. Verfahren gemäß einem der vorangehenden Ansprüche, wobei das während des Wechsels von dem ersten Gang in den zweiten Gang bereitgestellte Fahrantriebsdrehmoment einem geeignet wählbaren Verlauf zwischen dem vor und nach dem Gangwechsel bereitgestellten Fahrantriebsdrehmoment entspricht.

7. Verfahren gemäß einem der vorangehenden Ansprüche, wobei der Wechsel von dem ersten Gang in den zweiten Gang durchgeführt wird,
wenn der zweite Gang ein höheres Übersetzungsverhältnis aus der Drehzahl der Verbrennungskraftmaschine (5) und einer Drehzahl des Antriebsrades (15) als der erste Gang hat, und
wenn gleichzeitig eine der folgenden Bedingungen gilt:
- ein Sollantriebsdrehmoment und/oder eine Sollantriebsleistung liegt oberhalb einer ersten fahrgeschwindigkeitsabhängigen Parallelhybridbetrieb-Schwelle (213) für den ersten Gang oder
- das Sollantriebsdrehmoment und/oder die Sollantriebsleistung liegt oberhalb einer Summe aus der ersten fahrgeschwindigkeitsabhängigen Parallelhybridbetrieb-Schwelle (213) für den ersten Gang und einem von der ersten und/oder zweiten Elektromaschine maximal bereitstellbaren Zusatzantriebswert.

8. Verfahren gemäß einem der vorangehenden Ansprüche, wobei,
falls das Sollantriebsdrehmoment und/oder die Sollantriebsleistung oberhalb einer zweiten fahrgeschwindigkeitsabhängigen Parallelhybridbetrieb-Schwelle (221) für den zweiten Gang liegt,
ein zusätzlich erforderliches Zusatzdrehmoment von der ersten und/oder der zweiten Elektromaschine (9, 11) bereitgestellt wird,
wobei in den weiteren Hybridbetrieb gewechselt wird, wenn das Sollantriebsdrehmoment oberhalb einer Summe aus der zweiten fahrgeschwindigkeitsabhängigen Parallelhybridbetrieb-Schwelle (221) und dem von der ersten und/oder zweiten Elektromaschine maximal bereitstellbaren Zusatzdrehmoment für den zweiten Gang liegt.

9. Hybridfahrzeug (1), aufweisend:
eine Antriebseinrichtung (3) zum Antreiben eines Antriebsrades (15) des Hybridfahrzeuges (1), wobei die Antriebseinrichtung eine Verbrennungskraftmaschine (5), eine mit der Verbrennungskraftmaschine gekoppelte erste Elektromaschine (9), eine mit dem Antriebsrad koppelbare zweite Elektromaschine (11) sowie einen elektrischen Akkumulator (13) umfasst und ferner eine Hauptkupplung (17, K0) und ein Getriebe (19) umfasst, die zwischen der Verbrennungskraftmaschine (5) und dem Antriebsrad (15) angeordnet sind und
eine Antriebseinrichtungssteuerung (6), welche ausgebildet ist, ein Verfahren gemäß einem der vorangehenden Ansprüche auszuführen oder zu steuern.

## Claims

1. Method for operating a drive device (3) of a hybrid vehicle (1) for driving a drive wheel (15), wherein the drive device comprises an internal combustion engine (5), a first electric machine (9) coupled to the internal combustion engine (5), a second electric machine (11) couplable to the drive wheel, and an electrical accumulator (13), and further comprises a main clutch (17, K0) and a transmission (19) that are arranged between the internal combustion engine (5) and the drive wheel, wherein the method comprises:
while a first gear of the transmission (19) is engaged, operating (501) the internal combustion engine (5) at a first rotational speed (637, 413) for the first gear in a parallel hybrid mode in which, with the main clutch (K0) closed, a drive torque acting on the drive wheel (15) is generated by means of the internal combustion engine (5);
switching (503), while the main clutch (K0) is closed, to a further hybrid mode in which the internal combustion engine (5) drives the first electric machine (9) to generate electrical energy, and in which the second electric machine (11) transfers the electrical energy generated by the first electric machine (9) to the drive torque;
opening (505) the main clutch (K0) while a total torque of a torque from the internal combustion engine (5) and a torque from the first electric machine (9) is zero;
with the main clutch open, setting (507) a rotational speed of the internal combustion engine (5) to a second rotational speed (639, 415) for a second gear of the transmission (19) in the parallel hybrid mode, wherein the second rotational speed (639, 415) is a synchronous rotational speed (415) for the second gear;
engaging (509) the second gear of the transmission (19);
closing (511) the main clutch (K0) while the total torque of the torque from the internal combustion engine (5) and the torque from the first electric machine (9) is zero; and
switching (513) to the parallel hybrid mode while the second gear is engaged;
wherein the internal combustion engine is operated at a power which is greater than a target drive power by a load-point-increase power, wherein the method further comprises:
charging the accumulator (13) with a charging power corresponding to the load-point-increase power while the first gear is engaged, during the switch from the first gear to the second gear, and while the second gear is engaged.

2. Method according to Claim 1, wherein the switching to the further hybrid mode is carried out between a first time (t1) and a second time (t2), and wherein the switching comprises:
from the first time (t1), driving the first electric machine (9) by means of the internal combustion engine (5) to generate a temporally increasing electrical energy, said electrical energy being supplied to the second electric machine (11), in order to generate a temporally increasing torque, said torque providing together with a torque generated by the internal combustion engine (5) that decreases temporally at the main clutch (17, K0) the drive torque;
from the second time (t2), generating the drive torque exclusively by means of the second electric machine (11).

3. Method according to Claim 1 or 2, wherein the switching to the parallel hybrid mode is carried out between a third time (t3) and a fourth time (t4) and comprises:
from the third time (t3), generating a temporally decreasing electrical energy by means of the first electric machine (9) in a generator mode that is driven by the internal combustion engine (5), said electrical energy being supplied to the second electric machine (11), in order to generate a temporally decreasing torque, said torque providing together with a torque generated by the internal combustion engine (5) that increases temporally at the main clutch (17, K0) the drive torque;
from the fourth time (t4), generating the drive torque exclusively by means of the internal combustion engine (5).

4. Method according to the preceding claim where referring back to Claim 2, wherein the setting of the rotational speed of the internal combustion engine (5) is carried out between the second time and the third time and comprises:
if the second rotational speed (639) is higher than the first rotational speed (637): from the second time, increasing the supply of fuel to the internal combustion engine (5);
if the second rotational speed (415) is lower than the first rotational speed (413): from the second time, decreasing the supply of fuel to the internal combustion engine (5).

5. Method according to any one of the preceding claims, wherein the second rotational speed (415, 639) is determined on the basis of a transmission ratio of the first gear, a transmission ratio of the second gear and the first rotational speed (413, 637).

6. Method according to any one of the preceding claims, wherein the drive torque provided during the switch from the first gear to the second gear corresponds to a suitably selectable profile between the drive torque provided before the switching of gears and the drive torque provided after the switching of gears.

7. Method according to any one of the preceding claims, wherein the switch from the first gear to the second gear is carried out
if the second gear has a higher transmission ratio of the rotational speed of the internal combustion engine (5) and a rotational speed of the drive wheel (15) than the first gear, and
if one of the following conditions is simultaneously satisfied:
- a target drive torque and/or a target drive power are/is greater than a first travel-speed-dependent parallel-hybrid-mode threshold (213) for the first gear, or
- the target drive torque and/or the target drive power are/is greater than a sum of the first travel-speed-dependent parallel-hybrid-mode threshold (213) for the first gear and a maximum additional drive value able to be provided by the first and/or second electric machine.

8. Method according to any one of the preceding claims, wherein,
if the target drive torque and/or the target drive power are/is greater than a second travel-speed-dependent parallel-hybrid-mode threshold (221) for the second gear, an additionally required additional torque is provided by the first and/or second electric machine (9, 11),
wherein there is a switch to the further hybrid mode if the target drive torque is greater than a sum of the second travel-speed-dependent parallel-hybrid-mode threshold (221) and the maximum additional torque for the second gear able to be provided by the first and/or second electric machine.

9. Hybrid vehicle (1) having:
a drive device (3) for driving a drive wheel (15) of the hybrid vehicle (1), wherein the drive device comprises an internal combustion engine (5), a first electric machine (9) coupled to the internal combustion engine, a second electric machine (11) couplable to the drive wheel, and an electrical accumulator (13), and further comprises a main clutch (17, K0) and a transmission (19) that are arranged between the internal combustion engine (5) and the drive wheel (15), and
a drive-device controller (6) which is configured to carry out or control a method according to any one of the preceding claims.

## Revendications

1. Procédé de fonctionnement d'un dispositif de propulsion (3) d'un véhicule hybride (1) pour entraîner une roue motrice (15), le dispositif de propulsion comprenant un moteur à combustion interne (5), une première machine électrique (9) couplée au moteur à combustion interne (5), une deuxième machine électrique (11) pouvant être couplée à la roue motrice ainsi qu'un accumulateur électrique (13), et comprenant en outre un embrayage principal (17, K0) et une boîte de vitesses (19) qui sont disposés entre le moteur à combustion interne (5) et la roue motrice, le procédé comprenant les étapes consistant à :
pendant qu'un premier rapport de la boîte de vitesses (19) est engagé, faire fonctionner (501) le moteur à combustion interne (5) à une première vitesse de rotation (637, 413) pour le premier rapport dans un mode hybride parallèle dans lequel, lorsque l'embrayage principal (K0) est fermé, un couple d'entraînement agissant sur la roue motrice (15) est généré au moyen du moteur à combustion interne (5) ;
passer (503), pendant que l'embrayage principal (K0) est fermé, à un autre mode hybride dans lequel le moteur à combustion interne (5) entraîne la première machine électrique (9) pour générer de l'énergie électrique, et dans lequel la deuxième machine électrique (11) convertit l'énergie électrique générée par la première machine électrique (9) en ledit couple d'entraînement ;
ouvrir (505) l'embrayage principal (K0) pendant qu'un couple cumulé d'un couple du moteur à combustion interne (5) et de la première machine électrique (9) est nul ;
régler (507) une vitesse de rotation du moteur à combustion interne (5), lorsque l'embrayage principal est ouvert, sur une deuxième vitesse de rotation (639, 415) pour un deuxième rapport de la boîte de vitesses (19) dans le mode hybride parallèle, la deuxième vitesse de rotation (639, 415) étant une vitesse de rotation synchrone (415) pour le deuxième rapport ;
engager (509) le deuxième rapport de la boîte de vitesses (19) ;
fermer (511) l'embrayage principal (K0) pendant que le couple cumulé du couple du moteur à combustion interne (5) et de la première machine électrique (9) est nul ; et
passer (513) au mode hybride parallèle pendant que le deuxième rapport est engagé ;
le moteur à combustion interne fonctionnant avec une puissance qui dépasse une puissance d'entraînement de consigne d'une valeur égale à une puissance d'augmentation de point de charge, le procédé comprenant en outre l'étape consistant à :
charger l'accumulateur (13) avec une puissance de charge correspondant à la puissance d'augmentation du point de charge pendant que le premier rapport est engagé, pendant que le passage du premier rapport au deuxième rapport est effectué et pendant que le deuxième rapport est engagé.

2. Procédé selon la revendication 1, dans lequel le passage à l'autre mode hybride est effectué entre un premier instant (t1) et un deuxième instant (t2), et dans lequel le passage comprend les étapes consistant à :
à partir du premier instant (t1), entraîner la première machine électrique (9) au moyen du moteur à combustion interne (5) pour générer une énergie électrique croissante dans le temps, laquelle est fournie à la deuxième machine électrique (11) pour générer un couple croissant dans le temps qui, conjointement avec un couple généré par le moteur à combustion interne (5) décroissant dans le temps au niveau de l'embrayage principal (17, K0), fournit le couple d'entraînement ;
à partir du deuxième instant (t2), générer exclusivement le couple d'entraînement au moyen de la deuxième machine électrique (11).

3. Procédé selon la revendication 1 ou 2, dans lequel le passage au mode hybride parallèle est effectué entre un troisième instant (t3) et un quatrième instant (t4) et comprend les étapes consistant à :
à partir du troisième instant (t3), générer, au moyen de la première machine électrique (9) entraînée en mode générateur par le moteur à combustion interne (5), de l'énergie électrique décroissante dans le temps, laquelle est fournie à la deuxième machine électrique (11) pour générer un couple décroissant dans le temps qui, conjointement avec un couple généré par le moteur à combustion interne (5) croissant dans le temps au niveau de l'embrayage principal (17, K0), fournit le couple d'entraînement ;
à partir du quatrième instant (t4), générer exclusivement le couple d'entraînement au moyen du moteur à combustion interne (5).

4. Procédé selon la revendication précédente lorsqu'elle se réfère à la revendication 2, dans lequel le réglage de la vitesse de rotation du moteur à combustion interne (5) est effectué entre le deuxième instant et le troisième instant et comprend les étapes consistant à :
dans le cas où la deuxième vitesse de rotation (639) est supérieure à la première vitesse de rotation (637) :
augmenter l'alimentation en carburant du moteur à combustion interne (5) à partir du deuxième instant ;
dans le cas où la deuxième vitesse de rotation (415) est inférieure à la première vitesse de rotation (413) :
diminuer l'alimentation en carburant du moteur à combustion interne (5) à partir du deuxième instant.

5. Procédé selon l'une quelconque des revendications précédentes, dans lequel la deuxième vitesse de rotation (415, 639) est déterminée sur la base d'un rapport de démultiplication du premier rapport, d'un rapport de démultiplication du deuxième rapport et de la première vitesse de rotation (413, 637).

6. Procédé selon l'une quelconque des revendications précédentes, dans lequel le couple d'entraînement fourni pendant le passage du premier rapport au deuxième rapport correspond à un profil pouvant être sélectionné de manière appropriée entre le couple d'entraînement fourni avant et après le changement de rapport.

7. Procédé selon l'une quelconque des revendications précédentes, dans lequel le passage du premier rapport au deuxième rapport est effectué,
lorsque le deuxième rapport présente un rapport de démultiplication entre la vitesse de rotation du moteur à combustion interne (5) et une vitesse de rotation de la roue motrice (15) plus élevé que celui du premier rapport, et
lorsque, simultanément, l'une des conditions suivantes s'applique :
- un couple d'entraînement de consigne et/ou une puissance d'entraînement de consigne se situe au-dessus d'un premier seuil de mode hybride parallèle (213) dépendant de la vitesse de déplacement pour le premier rapport, ou
- le couple d'entraînement de consigne et/ou la puissance d'entraînement de consigne se situe au-dessus d'une somme du premier seuil de mode hybride parallèle (213) dépendant de la vitesse de déplacement pour le premier rapport et d'une valeur d'entraînement supplémentaire maximale pouvant être fournie par la première et/ou la deuxième machine électrique.

8. Procédé selon l'une quelconque des revendications précédentes, dans lequel
dans le cas où le couple d'entraînement de consigne et/ou la puissance d'entraînement de consigne se situe au-dessus d'un deuxième seuil de mode hybride parallèle (221) dépendant de la vitesse de déplacement pour le deuxième rapport,
un couple supplémentaire requis est fourni par la première et/ou la deuxième machine électrique (9, 11),
le passage à l'autre mode hybride étant effectué lorsque le couple d'entraînement de consigne se situe au-dessus d'une somme du deuxième seuil de mode hybride parallèle (221) dépendant de la vitesse de déplacement et du couple supplémentaire maximal pouvant être fourni par la première et/ou la deuxième machine électrique pour le deuxième rapport.

9. Véhicule hybride (1), comportant :
un dispositif de propulsion (3) pour entraîner une roue motrice (15) du véhicule hybride (1), le dispositif de propulsion comprenant un moteur à combustion interne (5), une première machine électrique (9) couplée au moteur à combustion interne, une deuxième machine électrique (11) pouvant être couplée à la roue motrice ainsi qu'un accumulateur électrique (13), et comprenant en outre un embrayage principal (17, K0) et une boîte de vitesses (19) qui sont disposés entre le moteur à combustion interne (5) et la roue motrice (15), et
une unité de commande de dispositif de propulsion (6), qui est conçue pour mettre en œuvre ou commander un procédé selon l'une quelconque des revendications précédentes.
